# EUROPEAN PATENT SPECIFICATION

(11) **EP 1 000 873 B1**
(45) Date of publication and mention of the grant of the patent: **19.11.2003**
(21) Application number: 99122375.1
(22) Date of filing: 17.04.1996
(51) Int. Cl.: B65D 81/26, B29C 45/00, B29C 45/13, B29C 45/14, B65D 45/16

(54) **Desiccant material included in a closed container**
Geschlossener Behälter mit Trockenmittel
Matériau dessicatif inclus dans un récipient fermé

(30) Priority: 19.04.1995 US 424996
(43) Date of publication of application: 17.05.2000
(62) Divisional of application: 96912812.3
(73) Proprietor: CSP Technologies Inc., Amsterdam, NY 12010 (US)
(72) Inventor: Hekal, Ihab, Stanford, CT 06903 (US)
(74) Representative: Stevens, Ian Edward

(56) References cited:
- DE-A- 4 013 799
- US-A- 3 301 788
- US-A- 4 016 117
- DATABASE WPI Section Ch, Week 7721 Derwent Publications Ltd., London, GB; Class A17, AN 77-37259Y XP002065175 & JP 52 047591 A (YAMANI YAKUHIN KK)

## Description

**TECHNICAL FIELD:** The present invention relates to containers having desiccating abilities. More particularly, the present invention relates to thermoplastic containers.

**BACKGROUND ART:** There are many articles that are preferably stored and/or shipped in an environment that is as moisture free as possible. Therefore, containers having the ability to absorb excess moisture have been recognized as desirable. One application in which moisture absorbing containers are desired is for the shipment and storage of medications whose efficacy is compromised by moisture. The initial placement of medicines into a sealed moisture free container is usually controllable. Furthermore, the container for the medicine is selected so that it has a low permeability to moisture. Therefore, the medication will normally be protected from moisture until it reaches the end user. Once the medicine is received by the consumer, however, the container must be repeatedly opened and closed to access the medication. Each time the container is opened and unsealed, moisture bearing air will most likely be introduced into the container and sealed therein upon closure. Unless this moisture is otherwise removed from the atmosphere or head space of the container, it may be detrimentally absorbed by the medication. For this reason, it is a well known practice to include a desiccating unit together with the medication in the container.

In other instances, moisture may be released from items that have been placed in containers for shipping and/or storage. Prime examples of such items are food stuffs that release moisture during shipping and storage. In the instance of containers that are sealed and substantially impermeable to moisture, the released moisture will remain within the container about the product. If not removed, this released moisture may have ill effects on the very item that released the moisture. It has been found that a substantial amount of moisture is released from certain food products within the first forty-eight (48) hours after manufacture and packaging. This released moisture will remain about the product until removed. If the moisture is not removed shortly after its release, it may cause the food to degrade into a condition that is not saleable. In these cases, desiccants may be included together with the contained items to continually absorb the released moisture until the product is unpacked. In this way, a relatively dry environment is maintained about the stored item.

The need to eliminate moisture from within sealed containers has been previously recognized. Early attempts to achieve these goals included the provision of desiccant materials in fabric or similar bags that are placed in the containers, together and commingled with the matter being shipped or stored. A consumer related problem, however, exists when the desiccant is loose and commingled together with consumable items. If not carefully and thoroughly processed upon unpacking, the desiccant may not be separated from the consumables and could harm a person if unknowingly ingested.

Another known mode by which a desiccant may be provided within a container includes coating the interior surface of the container vessel with a desiccant bearing material. Still further, it is known to provide desiccating abilities in a container through the use of layered structures in which a desiccant is "sandwiched" between moisture permeable material that confines the desiccant. These layered structures often take the form of flexible sheeting that may be formed into bag type containers into which items requiring a reduced moisture environment are placed.

DE-A-4013799 discloses a container having desiccating capabilities wherein the desiccant is substantially located at the interior surface.

Several of the known means by which desiccant bearing containers are constructed require multiple steps and result in more complex and layered structures than are desired. Furthermore, the provision of desiccant capsules together with contained items is not always satisfactory. As previously explained, commingling of desiccant with food items and medications is undesirable from a consumer stand point in that the desiccant may be inadvertently ingested. Still further, if the desiccant is not integrally constructed with the container, or at least attached thereto, it may be prematurely removed while still needed for continued removal of moisture from within the container. Therefore, a need has been recognized for containers that include a desiccant as an integral component of the container's body. Regarding the included desiccant of the container, it is desired to enhance its capabilities of moisture absorption with respect to both rate and quantity. Still further, as in all manufacturing processes, it is desired to reduce the required steps for constructing desiccating containers and simplify the resulting structures.

**DISCLOSURE OF THE INVENTION:** One embodiment of the present invention includes a container having desiccating capabilities. The container includes a container body that forms at least a partial enclosure so that an inside space and an outside space is created with respect to the container body. There is an insert formed from desiccant entrained thermoplastic that is fixed relative to the container body. At least a portion of the insert is exposed to the inside space of the container body so that it can absorb moisture therefrom. The desiccant entrained thermoplastic from which the insert is constructed comprises at least one polar organic compound that enhances the absorption rate thereof and preferably has a high desiccant concentration of at least forty percent desiccant to thermoplastic by weight. The container body is constructed from substantially desiccant-free thermoplastic in one embodiment and from low desiccant concentrate thermoplastic having at most twenty percent desiccant to thermoplastic by weight in another embodiment. In a preferred embodiment, the container body is constructed from polypropylene. A cap that is sealably engageable with the container body and constructed from polyethylene may optionally be provided. It is contemplated that the insert may be sufficiently encased by the container body so that the insert is only exposed to the inside space of the container and not to the exterior of the container. In one embodiment, the insert is fixed to the container body by a retainer lip formed by the container body about the insert. Further methods are contemplated where the insert is fixed to the container body by a shrink-fitting of the container body about the insert. It is contemplated that the insert and the container body may be co-moulded into a unitary body.

The insert may take the form of a liner that covers at least a majority of the interior surface area of the container body. When a cap is present, the insert may be included in the cap.

A method for co-moulding the above container having desiccating capabilities is also disclosed. The steps of the method include injecting a high desiccant concentrate thermoplastic insert into a container mould. A container body is injected about the insert so that a single unitary body is formed from the two components. When the container body is formed, the insert is enclosed within the container body so that the insert is only exposed to an inside space of the container. The step of injecting the container body about the insert is performed contemporaneously with the step of injecting the insert so that the insert and the body meld together at an interface thereby forming the unitary body. Alternatively, the injection of the container body about the insert is performed at a temperature sufficiently elevated so that the insert and the body meld together at an interface thereby forming the unitary body. Before the thermoplastic is injected into the mould, the various desiccant concentrations are prepared. During the injection process, the high desiccant concentrate thermoplastic is introduced into the mould through a first injection port and the desiccant-free or low concentrate thermoplastic is introduced into the mould through a second injection port. In one embodiment, the mould is moved from a first injection station to a second injection station. A preferred means for moving the mould between stations is on a rotating table.

The present invention provides a container, and process for constructing the same that satisfies the need for more effective desiccating storage and shipping containers. The containers of the present invention provide superior desiccating abilities, while at the same time permitting efficient construction of a container that has and maintains structural integrity. Furthermore, the present invention provides a means by which the container may be formed having a substantially unitary and continuous body.

### BRIEF DESCRIPTION OF DRAWINGS

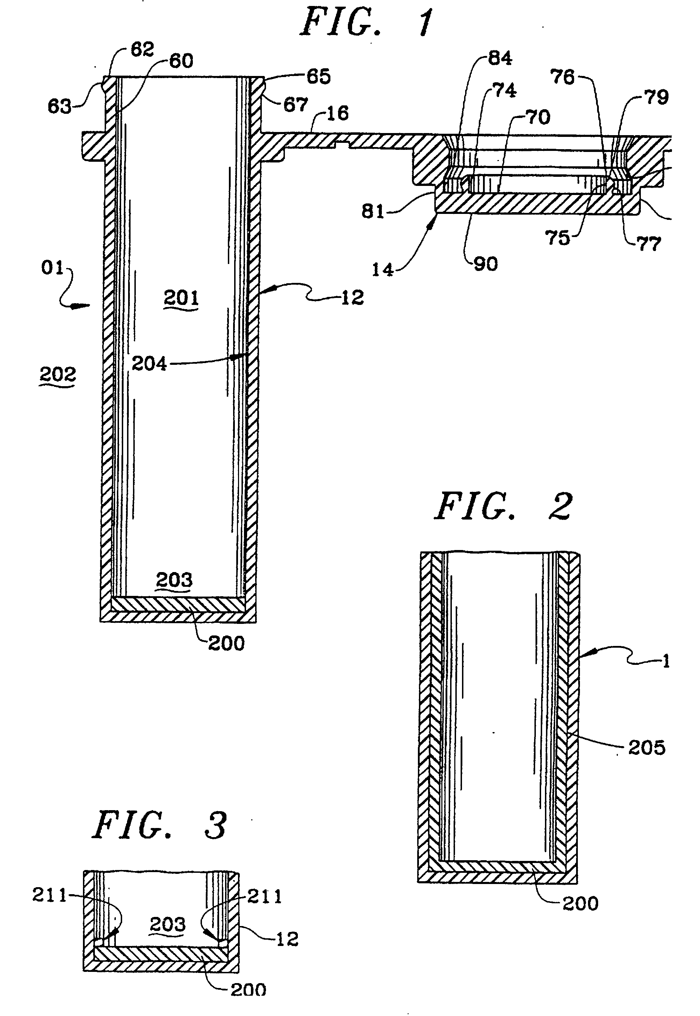

Figure 1 is a cross-sectional view of a desiccating container with an insert in the form of a disk moulded therein.
Figure 2 is a cross-sectional view of a desiccating container with an insert in the form of a liner moulded therein.
Figure 3 is a partial cross-sectional view of the container body showing a lip retainer.

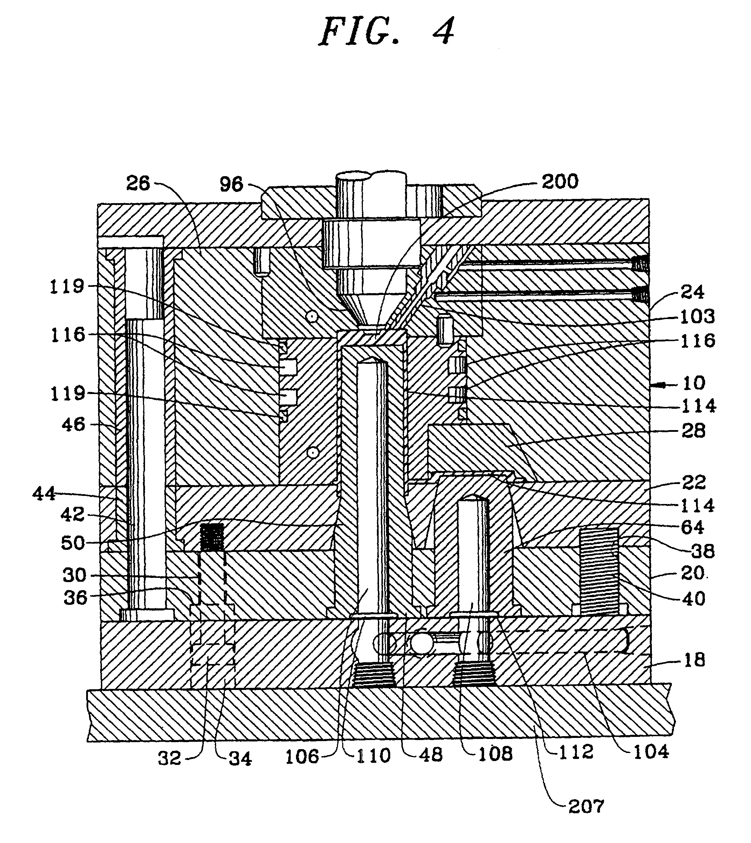

Figure 4 is a side view of a mould in partial section mounted upon a rotatable table for transport between injection stations and showing a container and insert-moulded therein.

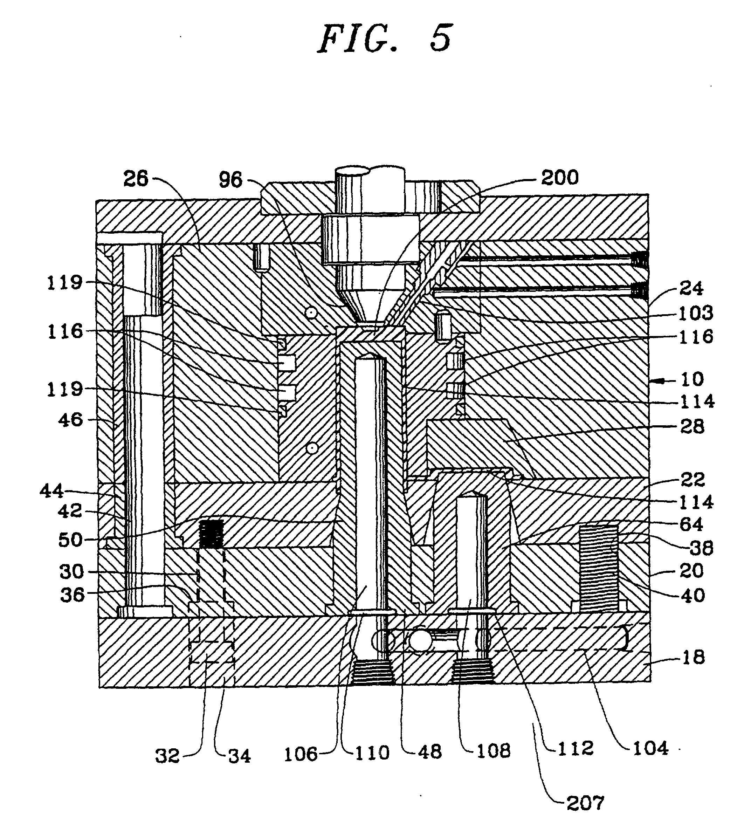

Figure 5 is a side view of a mould in partial section showing a container and insert moulded therein in a single station configuration with two injection ports.

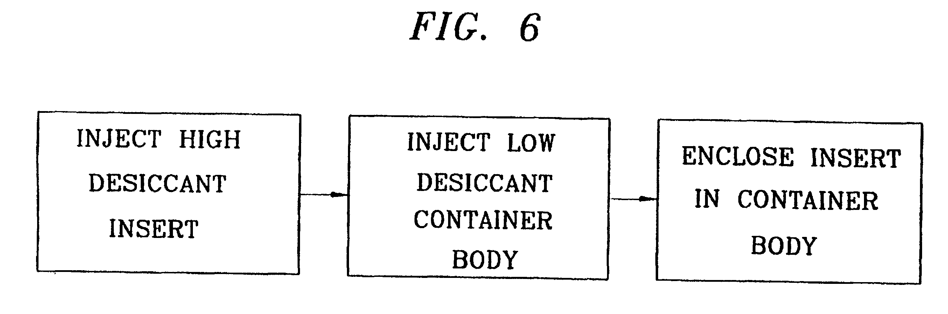

Figure 6 is a schematic of the method by which the container is co-moulded.
**MODE(S) FOR CARRYING OUT THE INVENTION:** In one embodiment of the present invention, a relatively small container may be manufactured similar in construction to the aseptic vial and cap of U.S. Patent 4,783,056 of Robert S. Abrams. Therein, the injection moulding of capped sample vials from thermoplastic material is disclosed. Like reference numerals are used in the present application to those of the US-A- 4,783,056 patent to designate similar or like apparatus or process.

The presently disclosed invention includes and is applicable to the manufacture of similar containers. The containers 01 disclosed herein, however, are not limited to vials. It is contemplated that containers 01 constructed according to the present invention may be larger or smaller than the vials of US-A-4,783,056 and of variable shape. Furthermore, the caps 14 may be integrally formed with the bodies 12 of the containers 01, or they may be manufactured as separate units. Still further, the present invention may be embodied exclusively within the body of a container 12 or a cap 14 for a container 01.

The material used in the construction of these containers 01 typically provide a barrier between the interior 201 and exterior 202 of the container 01 that is substantially moisture impermeable and most often is a thermoplastic. While it is contemplated that any thermoplastic may be utilized, polypropylene is preferred for the construction of the body 12 of the container 01. Polypropylene is desirable because of its durability, rigidity and resistance to breakage after being moulded into the form of a container 01. Other examples of suitable thermoplastics may be selected from the following groups: polyolefin, polyethylene, polycarbonate, polyamide, ethylene-vinyl acetate copolymer, ethylene-methacrylate copolymer, polyvinyl chloride, polystyrene, polyester, polyester amide, polyacrylic ester, and polyvinylidene chloride, acrylic, polyurethane, polyacetal, and polycarbonate. These and other thermoplastics may be utilized either singularly, or in combinations.

The present invention includes the manufacture of a container 01 in which the majority of the container's body 12 is constructed from the base thermoplastic, e.g. polypropylene, because of its durability and resistance to breakage. To establish and/or increase a desiccating capacity of the moulded container 01, an insert 200 that has been formed from a desiccant entrained thermoplastic is integrally constructed with the body 12 of the container 01. The concentration of desiccant entrained within the insert 200 may exceed seventy-five percent (75%). Typically, however, the desiccant concentration in the insert 200 will fall within a range of forty to seventy-five per cent (40-75%) desiccant to thermoplastic, by weight. This concentration is considered to be a high concentration for most thermoplastics. The maximum desiccant bearable concentrations will vary among the various types of thermoplastics due to their differing characteristics. In the instance of polypropylene as the base material, an upper concentration of desiccant will be considered to be about sixty percent (60%) by weight. In the instance of polyethylene, the maximum concentration of desiccant will be about seventy-five percent (75%) by weight. As the desiccant concentrations within the thermoplastics increase, the performance of the material degenerates to unacceptable levels.

In one embodiment, the insert 200 is located in the base or bottom 203 of the container body 12 and is exposed to the interior space 201 of the container 01. The configuration of this embodiment is similar to a sample vial. Because the durability and resistance to breakage is lessened in the higher ranges of desiccant content, it is advantageous to have the polypropylene used in the construction of the container's body 12 formed about the insert 200 except for at those surfaces to be exposed to the interior 201 of the container 01. A container 01 of this configuration provides desired structural integrity while also providing the greater desiccating ability of the high desiccant laden insert 200 that is directly exposed to the interior 201 of the container 01. It is also contemplated that the insert 200 may be included in the construction of the container's cap 14. In this case, the insert will be integrally formed with the cap 14 so that an exterior surface of the insert 200 is exposed to the interior 201 of the container 01 when installed thereupon.

As a further alternative embodiment, the insert 200 may be less localized, and extended to a greater degree about a greater portion of the interior surface 204 of the container body 12. In this instance, the high desiccant bearing thermoplastic forms more of a liner 205 at the interior surface 204 of the container 01. To provide maximum desiccating abilities, the liner 205 may completely cover the interior surface 204 of the container 01; this may optionally include the interiorly exposed surfaces of a cap 14 of a closed container 01.

One contemplated method for the manufacture of the container 01 includes the provision of a preformed insert 200 about which the thermoplastic of the remainder of the body 12 of the container 01 is injection moulded. In this process, it is important that the insert 200 be affixed to or within the body 12 of the container 01. This might be achieved merely by moulding the body 12 about the insert 200 so that the two components are mechanically connected one to the other. The mechanical connection may take the form of a retaining lip 206 formed by the container body 12 about the insert 200 that effectively fixes the insert 200 with respect to the rest of the body 01.

A "shrink-fit" is claimed in EP-B-0824480 from which this application has been divided. A particular example of this shrink-fit application would be the provision of a desiccant loaded insert 200 constructed from a base thermoplastic of polyethylene and a container body 12 moulded thereabout from a base thermoplastic of polypropylene. Upon cooling after being injection moulded, polyethylene shrinks less than polypropylene under similar circumstances. Therefore, if a polypropylene body is injection moulded about a polyethylene insert 200 that has been either previously formed, or is injection moulded contemporaneously with the container body 12, the polypropylene container body 12 will shrink about the polyethylene insert 200. This shrink-fit method may be implemented whether or not the insert 200 is relatively small and localized with respect to the container body 12 or whether the insert 200 takes the form of a previously described liner 205 configuration. In either case, the exteriorly formed container body 12 may shrink about the insert 200 if the thermoplastics from which the insert 200 and container body 12 are appropriately selected. The use of the retaining lip 206 and shrink-fit method of affixing the insert 200 or liner 205 to the container body 12 is used primarily when the materials of construction of the insert 200 and container body 12 are not compatible. The two components will be considered incompatible if they do not automatically adhere one to the other as a result of the manufacturing process.

Alternatively, the insert 200 will be constructed from a material that bonds to the body 12 of the container 01 when the body 12 is placed thereabout. Therefore, an optional method for constructing the insert 200 bearing container 01 of the present invention is as a result of co-moulding. That is, the primary body 12 of the container 01 is moulded, while the high desiccant insert 200 is also moulded. The two portions are said to be co-moulded because they are either simultaneously or sequentially injection moulded in a single process. The process of co-moulding results in the construction of a unitary container body 12 in which the insert 200 is seamlessly combined with the body 12. In most instances, the insert 200 and container body 12 adhere one to the other as a result of a melding together of the base thermoplastics from which each is constructed at an interface therebetween. The melding action takes place when the insert 200 and container body 12 are each injected into the mould 10 sufficiently closely with respect to time so that each is in at least a semi-molten state while in contact one with the other. Alternatively, heat from the thermoplastic of a body 12 injected about an insert 200 may cause the contacted portions of the insert 200 to melt slightly and meld with the thermoplastic of the body 12 adjacent thereto. In each case, there will be a phase between the high desiccant concentrate insert 200 and container body 12 in which the two construction materials blend to some degree creating a seamless interface and therefore unitary container 01 out of the two components.

As explained, the high-desiccant insert 200 may be located in the base or bottom 203 of the container 01. A surface of the insert 200 may be directly exposed to the interior 201 of the container 01, or the insert 200 may be fully encapsulated by the primary body 12. Still further, it is contemplated that the bottom 203 portion of the container 01 may be constructed exclusively from the high-desiccant thermoplastic if the material's reduced qualities do not adversely affect the performance of the container 01. This may be the case if the container 01 is not going to be exposed to high stresses or rough handling. To produce such a container 01, it is contemplated that the lower portion and upper portion will be formed from thermoplastic of differing desiccant concentration, that is, thermoplastic of lesser desiccant concentration will be injected into the upper portion of the mould 10 and higher desiccant concentration will be injected into the lower portion. The thermoplastic of the two portions will commingle at an interface and meld together into a unitary container body 12, provided that the base thermoplastics of each are compatible. Like the other injection processes, it is contemplated that each portion may be injected from separate injection ports 209 and 210 or the same port. As a result, the portions may be injected either sequentially or contemporaneously. In each case, the proportion of the container body 12 formed by each portion will be controlled by the amount of thermoplastic injected into each.

In any event, the thermoplastic in which the desiccant is entrained is moisture permeable to the degree that moisture from the interior 201 of the container 01 may be transferred to and stored in the desiccant. It is possible that the thermoplastic from which the insert 200 is manufactured may have a higher moisture permeability than that from which the remainder of the body 12 of the container 01 is constructed. In this case, the insert 200 may be enclosed within the container 01 by a lower moisture permeable thermoplastic of the container's body 12. In this way, moisture will not readily be transferred from outside the container 01 to the interior. In view of the possibility of desiring differing moisture permeabilities in the insert 200 and the container body 12, it is contemplated that the two components 200, 12 may be constructed from different materials that are potentially incompatible.

One embodiment of the process of the present invention, in which the insert 200 may be co-moulded within the primary body 12 of the container 01, may vary. In a first moulding process, it is contemplated that the mould 10 will move between two injection stations. An injection assembly that is generally designated by reference numeral 96 may be installed and withdrawn from the mould frame 24. At one station, typically the first station, the insert 200 will be injection moulded. In order to mould the insert 200, a ring shaped barrier will be provided that has a circumference substantially matching the perimeter of a lower end of core 48. It is desired that the thickness of the insert 200 be approximately one-eighth of an inch (3.175mm), therefore the thickness or height of the barrier ring will likewise be one-eight of an inch (3.175mm). As the injection assembly 96 is installed within the mould frame 24, the barrier ring is the leading component. The ring contacts the lower surface of the core 48 forming a barrier within which thermoplastic may be injected. High concentrate desiccant thermoplastic is then injected into the interior of the ring thereby forming the insert 200. The high concentrate desiccant thermoplastic of the insert 200 may be injected at a temperature that is less than the temperature at which the thermoplastic of the container body 12 is injected. The lowered temperature may be required so that the desiccant contained therein does not degrade. The necessity of the lowered temperature may be obviated by using different and/or high-grade desiccants that are not susceptible to degradation within the normal temperature ranges of the injection process.

When the insert 200 has sufficiently cooled to a point that it will maintain its shape after the removal of the barrier ring, the injection assembly 96 is withdrawn from the mould frame 24, together with the barrier ring that is attached thereto. The insert 200 adheres to the lower surface of the core 48 and remains within the mould 10.

The mould 10 is then moved to a second injection station similar to that previously described, but configured so that the desiccant-free thermoplastic is injected into the cavity 114 thereby forming the body of the container 12. The means for conveying the mould frame 24 between stations is preferred to be a rotable table 207 that operates continuously between the two stations. During the second injection, thermoplastic is injected to form the body 12 of the container 01 and optionally the cap 14. During the same step, thermoplastic is also injected about the insert 200 that has been previously formed. In this way, those portions of the insert 200 that would have been exposed to the exterior 202 of the container 01 are covered by the desiccant-free thermoplastic.

The top surface of the insert 200 is not covered by the desiccant-free thermoplastic because it remains in contact with the lower surface of the core 48. Though the insert 200 is allowed to sufficiently cool to maintain its form between station one and two and during the second injection, the second injection of thermoplastic is made at a temperature sufficient to cause the two components 200,12 to bond together as described herein. Depending upon the conditions, it is possible that the high concentrate insert 200 will melt enough so that it bleeds into the body 12 of the container 01 located adjacent thereto. The amount of bleed, however, is not significant and does not degrade the performance of the exterior thermoplastic that gives the container 12 its strength and durability.

In an alternative moulding process which is one embodiment of the present invention, only one injection station is utilized, but two injection ports 209 and 210 are provided thereto. The high concentrate desiccant thermoplastic that forms the insert 200 is injected through one of the ports 209, while the desiccant-free thermoplastic that forms the body 12 of the container 01 is injected through the other of the ports 210. In this process, the core 48 must move longitudinally away from the injection assembly 96 a distance equal to the thickness of the insert 200 that is to be formed. Like the two station process, the insert 200 is first formed, and the body 12 of the container 01 is formed thereabout. In most other respects, the two processes are similar.

It is anticipated that the rate of absorption into the insert 200 may be controlled by the amount of surface area of the insert 200 exposed to the container's 01 interior 201. If greater absorption rates are desired, more surface area of the insert 200 may be exposed. If it is desired that a more prolonged absorption process be achieved, then less surface area will be exposed. It is further contemplated that the rate of absorption by the insert 200 may be controlled by encapsulation of the insert 200. If slower rates of absorption are desired, then the insert 200 can be encased to greater degrees by the thermoplastic that forms the body 12 of the container 01 and which is less permeable to moisture. The rate of absorption may also be controlled by using different types of thermoplastics having different moisture permeability rates.

According to the present invention, the rate of moisture absorption by the insert 200 is to be increased by admixture to the desiccant loaded thermoplastic of one or more polar organic compounds, such as "starch". This greatly increases the rate of absorption. The addition of polyvinyl alcohol (PVOH) has similar boosting effects upon the absorption rate of the desiccant loaded thermoplastic. In one particular example, the addition of five percent (5%) starch by weight to polypropylene bearing ten percent (10%) desiccant by weight absorbed moisture at twice the rate of polypropylene bearing twenty percent (20%) desiccant and no starch.

The amount of moisture that can be absorbed by the insert 200 may be controlled in several ways. It is contemplated that the amount of moisture absorbable by the insert 200 may be effected by changing the concentration of desiccant within acceptable ranges; the greater the concentration, the greater the amount of moisture that can be captured.

In an alternative embodiment, the thermoplastic from which the body 12 is constructed may also have desiccant entrained and suspended therein, but in lesser concentrations than the insert 200. It has been found that the concentration of desiccant in the thermoplastic affects the performance characteristics of the moulded container 01. As an example, it has been found that while the plastic will carry relatively high percentages of desiccant, desirable characteristics such as durability and resistance to breakage may degrade at higher desiccant concentrations. It has also been found that the plastic may be combined with lower concentrations of desiccant without appreciably degrading the performance of the thermoplastic material in its moulded and solid state. In a typical application, a relatively low concentration will fall within the range of five to fifteen percent (5 - 15%) desiccant by weight to thermoplastic, with a preferred concentration being approximately seven and one-half percent (7.5%). Additionally, for the purposes of the disclosure made herein, desiccant-free thermoplastic may also be considered low concentration thermoplastic.

Various concentrations of desiccant bearing thermoplastic are commercially available in pellet form. Custom concentrations may be achieved by dry blending higher concentration desiccant pellets with lower concentration or desiccant-free pellets of thermoplastic. When blended in appropriate proportions, any desiccant concentration less than that of the high concentration desiccant pellets may be accomplished. After the dry blending process, the resulting mixture of pellets may be injection moulded in a typical manner.

In a preferred embodiment of the present invention, it is contemplated that the source thermoplastic for the insert 200 and that of the container body 12 may be custom blended to achieve the desired respective desiccant concentrations for each. For the injection moulding process, two supply hoppers would be provided; one having the high-desiccant thermoplastic from which the insert is formed and the other having a mixture of pellets of differing concentrations that when melted into solution produce the lower-desiccant thermoplastic from which the body 12 of the container 01 is formed. The insert 200 and container body 12 are then injection moulded according to the various methods described herein.

## Claims

1. A container (1) having desiccating capabilities, said container (1) comprising:
a container body (12) forming at least a partial enclosure so that an inside space (201)and an outside space (202)is created with respect to said container body (12);
an insert (200) formed from desiccant entrained thermoplastic and being fixed relative to said container body (12); and
at least a portion of said insert (200) being exposed to the inside space (201)of said container body (12) for absorbing moisture therefrom,
**characterised in that** said desiccant entrained thermoplastic from which said insert (200) is constructed further comprises at least one polar organic compound that enhances the absorption rate of said desiccant entrained thermoplastic.

2. A container (1) as claimed in claim 1 **characterised in that** said container body (12) comprises a cap (14) integral therewith or installable thereon for closing said container body (12).

3. A container (1) as claimed in claim 2 **characterised in that** said insert (200) is integrally formed with said cap (14) so that an exterior surface of the insert (200) is exposed to the interior (201) of the container (1) when the container (1) is closed by said cap (14).

4. A container (1) as claimed in claim 2, wherein said insert (200) is sufficiently encased by said container body (12) so that said insert (200) is only exposed to the inside space (201)of the container (1) .

5. A container (1) as claimed in claim 4, wherein said insert (200) forms a liner that covers at least a majority of interior surface area of the container body (12).

6. A container (1) as claimed in claim 4, , wherein said insert (200) is fixed relative to said container body (12) by co-moulding said insert (200) and said container body (12) into a unitary body, or by means of a retainer lip (211) formed by said container body (12) about said insert (200).

7. A container (1) as claimed in any preceding claim, **characterised in that** said polar organic compound is polyvinyl alcohol and/or starch.

8. A container (1) as claimed in claim 7 **characterised in that** said starch is present in said insert (200) in an amount of 5% by weight.

9. A container (1) as claimed in any preceding claim, wherein said desiccant entrained thermoplastic from which said insert (200) is constructed is of a high desiccant concentration having at least forty percent desiccant to thermoplastic by weight.

10. A container (1) as claimed in any preceding claim, wherein said container body (12) is constructed from polypropylene.

11. A container (1) as claimed in any preceding claim, wherein said container body (12) is constructed from substantially desiccant-free thermoplastic.

12. A container (1) as claimed in any one of claims 1 to 11, wherein said container body (12) is constructed from low desiccant concentration thermoplastic having at most twenty percent desiccant to thermoplastic by weight.

13. A method for producing a container (1) having desiccant capabilities comprising the steps of:
(a) molding an insert (200) from desiccant entrained thermoplastic comprising a polar organic compound that enhances the absorption rate of the desiccant entrained thermoplastic;
(b) molding a container body (12) having at least a partial enclosure so that an inside space (201)and an outside space (202)is created with respect to the container body (12);
(c) optionally molding a cap (14) for closing the container body (12);
(d) fixing the insert (200) relative to the container body (12) and/or cap (14) such that at least a portion of the insert (200) is exposed to the inside space (201) of the container body (12) for absorbing moisture therefrom.

14. A method according to claim 13 wherein the polar organic compound is polyvinyl alcohol and/or starch.

15. A method for producing a container (1) according to claim 13 or 14 wherein step (d) of the method comprises retaining the insert (200) by means of a retainer lip (211) formed by the container body (12) about the insert (200).

## Patentansprüche

1. Behälter (1), der Trocknungseigenschaften besitzt, wobei der Behälter (1) folgende Bestandteile umfaßt:
einen Behälterkörper (12), der zumindest ein Teilgehäuse bildet, so daß ein Innenraum (201) und ein Außenraum (202) bezüglich des Behälterkörpers (12) erzeugt wird,
einen Einsatz (200), der aus einem mit einem Trocknungsmittel versetzten thermoplastischen Material hergestellt und bezüglich des Behälterkörpers (12) befestigt ist, wobei
wenigstens ein Teil des Einsatzes (200) dem Innenraum (201) des Behälterkörpers (12) ausgesetzt ist, um aus ihm Feuchtigkeit zu absorbieren,
**dadurch gekennzeichnet, daß** das mit dem Trocknungsmittel versetzte thermoplastische Material, aus dem der Einsatz (200) besteht, wenigstens eine polare organische Verbindung umfaßt, die die Absorptionsrate des mit dem Trocknungsmittel versetzten thermoplastischen Matreials erhöht.

2. Behälter (1) nach Anspruch 1, **dadurch gekennzeichnet, daß** der Behälterkörper (12) eine mit ihm integral ausgebildete oder auf ihn aufbringbare Kappe (14) zum Verschließen des Behälterkörpers (12) umfaßt.

3. Behälter (1) nach Anspruch 2, **dadurch gekennzeichnet, daß** der Einsatz (200) integral mit der Kappe (14) ausgebildet ist, so daß eine äußere Oberfläche des Einsatzes (200) dem Innenraum (201) des Behälters (1) ausgesetzt ist, wenn der Behälter (1) durch die Kappe (14) verschlossen ist.

4. Behälter (1) nach Anspruch 2, bei dem der Einsatz (200) von dem Behälterkörper (12) so weitgehend umschlossen ist, so daß der Einsatz (200) nur dem Innenraum (201) des Behälters (1) ausgesetzt ist.

5. Behälter (1) nach Anspruch 4, bei dem der Einsatz (200) eine Auskleidung bildet, die zumindest einen Großteil des inneren Oberflächenbereichs des Behälterkörpers (12) bedeckt.

6. Behälter (1) nach Anspruch 4, bei dem der Einsatz (200) dadurch, daß der Einsatz (200) und der Behälterkörper (12) gemeinsam zu einem einstückigen Körper geformt sind, oder mit Hilfe einer Rückhaltelippe (211) bezüglich des Behälterkörpers (12) befestigt ist, die von dem Behälterkörper (12) um den Einsatz (200) herum gebildet wird.

7. Behälter (1) nach einem der vorhergehenden Ansprüche, **dadurch gekennzeichnet, daß** die polare organische Verbindung Polyvinylalkohl und/oder Stärke ist.

8. Behälter (1) nach Anspruch 7, **dadurch gekennzeichnet, daß** die Stärke in dem Einsatz (200) in einer Menge von 5 Gew.-% vorhanden ist.

9. Behälter (1) nach einem der vorhergehenden Ansprüche, bei dem das mit einem Trocknungsmittel versetzte thermoplastische Material, aus dem der Einsatz (200) hergestellt ist, eine hohe Trocknungsmittel-Konzentration aufweist, so daß wenigstens 40 Gew.-% Trocknungsmittel bezüglich des thermoplastischen Materials vorhanden sind.

10. Behälter (1) nach einem der vorhergehenden Ansprüche, bei dem der Behälterkörper (12) aus Polypropylen hergestellt ist.

11. Behälter (1) nach einem der vorhergehenden Ansprüche, bei dem der Behälterkörper (12) aus einem im wesentlichen von Trocknungsmittel freien thermoplastischen Material hergestellt ist.

12. Behälter (1) nach einem der Ansprücne 1 bis 11, bei dem der Behälterkörper (12) aus einem thermoplastischen Material mit einer geringen Trocknungsmittel-Konzentration hergestellt ist, das maximal 20 Gew.-% Trocknungsmittel bezüglich des thermoplastischen Materials aufweist.

13. Verfahren zur Herstellung eines Behälters (1), der Trocknungseigenschaften besitzt, wobei das Verfahren folgende Schritte umfaßt:
(a) Formen eines Einsatzes (200) aus einem mit einem Trocknungsmittel versetzten thermoplastischen Material, das eine polare organische Verbindung umfaßt, die die Absorptionsrate des in dem thermoplastischen Material enthaltenen Trocknungsmittels erhöht,
(b) Formen eines Behälterkörpers (12), der zumindest ein Teilgehäuse bildet, so daß ein Innenraum (201) und ein Außenraum (202) bezüglich des Behälterkörpers (12) erzeugt wird,
(c) optionales Formen einer Kappe (14) zum Verschließen des Behälterkörpers (12), und
(d) Befestigen des Einsatzes (200) bezüglich des Behälterkörper (12) und/oder der Kappe (14) derart, daß zumindest ein Teil des Einsatzes (200) dem Innenraum (201) des Behälterkörpers (12) ausgesetzt ist, um aus ihm Feuchtigkeit zu absorbieren.

14. Verfahren nach Anspruch 13, bei dem die polare organische Verbindung Polyvinylalkohol und/oder Stärke ist.

15. Verfahren zur Herstellung eines Behälters (1) nach Anspruch 13 oder 14, bei dem der Schritt (d) des Verfahrens das Festhalten des Einsatzes (200) mit Hilfe einer Haltelippe (211 ) umfaßt, die von dem Behälterkörper (12) um den Einsatz (200) herum gebildet wird.

## Revendications

1. Récipient (1 ) ayant des propriétés de dessiccation, ledit récipient (1 ) comprenant :
un corps de récipient (12) formant au moins une enceinte partielle de sorte qu'un espace intérieur (201) et un espace extérieur (202) sont créés par rapport au dit corps de récipient (12) ;
un insert (200) formé à partir d'une matière thermoplastique contenant un agent dessiccateur et étant fixé par rapport au dit corps de récipient (12) ; et
au moins une partie dudit insert (200) étant à découvert sur le côté intérieur (201) dudit corps de récipient (12) afin d'absorber l'humidité de celui-ci,
**caractérisé en ce que** ladite matière thermoplastique contenant un agent dessiccateur dans laquelle est fabriqué ledit insert (200) comprend en outre au moins un composé organique polaire qui améliore le taux d'absorption de ladite matière thermoplastique contenant un agent dessiccateur.

2. Récipient (1) selon la revendication 1, **caractérisé en ce que** ledit corps de récipient (12) comprend un capuchon (14) formé intégralement avec celui-ci ou pouvant être monté sur celui-ci afin de fermer ledit corps de récipient (12).

3. Récipient (1) selon la revendication 2, **caractérisé en ce que** ledit insert (200) est formé intégralement avec ledit capuchon (14) de sorte qu'une surface extérieure de l'insert (200) est à découvert vers l'intérieur (201) du récipient (1) lorsque ledit récipient (1) est fermé par ledit capuchon (14).

4. Récipient (1) selon la revendication 2, dans lequel ledit insert (200) est suffisamment encastré par ledit corps de récipient (12) de sorte que ledit insert (200) est à découvert uniquement sur l'espace intérieur (201) du récipient (1).

5. Récipient (1) selon la revendication 4, dans lequel ledit insert (200) forme une chemise qui recouvre au moins une majorité de la surface intérieure du corps de récipient (12).

6. Récipient selon la revendication 4, dans lequel ledit insert (200) est fixé par rapport au dit corps de récipient (12) par moulage conjugué dudit insert (200) et dudit corps de récipient (12) en un corps unitaire, ou au moyen d'une lèvre de retenue (211) formée par ledit corps de récipient (12) autour dudit insert (200).

7. Récipient (1) selon l'une quelconque des revendications précédentes, **caractérisé en ce que** ledit composé organique polaire est un alcool polyvinylique et / ou un amidon.

8. Récipient (1) selon la revendication 7, **caractérisé en ce que** ledit amidon est présent dans ledit insert (200) à raison de 5% en poids.

9. Récipient (1) selon l'une quelconque des revendications précédentes, dans lequel ladite matière thermoplastique contenant un agent dessiccateur à partir de laquelle est fabriqué ledit insert (200) est une matière à concentration élevée d'agent dessiccateur d'au moins quarante pour cent d'agent dessiccateur en poids par rapport à la matière thermoplastique

10. Récipient (1) selon l'une quelconque des revendications précédentes, dans lequel ledit corps de récipient (12) est fabriqué à partir de polypropylène.

11. Récipient (1) selon l'une quelconque des revendications précédentes, dans lequel ledit corps de récipient (12) est fabriqué à partir d'une matière thermoplastique ne comprenant essentiellement aucun agent dessiccateur.

12. Récipient (1) selon l'une quelconque des revendications 1 à 11, dans lequel ledit corps de récipient (12) est fabriqué à partir d'une matière thermoplastique à faible concentration d'agent dessiccateur ayant au maximum vingt pour cent d'agent dessiccateur en poids par rapport à la matière thermoplastique.

13. Procédé de production d'un récipient (1) ayant des capacités de dessiccation comprenant les étapes de :
(a) Moulage d'un insert (200) à partir d'une matière thermoplastique comprenant un composé polaire qui améliore le taux d'absorption de la matière thermoplastique contenant l'agent dessiccateur ;
(b) Moulage d'un corps de récipient (12) comportant au moins une enceinte partielle de sorte qu'un espace intérieur (201) et un espace extérieur (202) sont créés par rapport au corps de récipient (12) ;
(c) Moulage en option d'un capuchon (14) destiné à fermer le corps de récipient (12) ;
(d) Fixation de l'insert (200) par rapport au corps de récipient (12) et / ou au capuchon (14) de sorte qu'au moins une partie de l'insert (200) est à découvert vers l'espace intérieur (201) du corps de récipient (12) afin d'absorber l'humidité en provenance de celui-ci.

14. Procédé selon la revendication 13 dans lequel le composé organique polaire est un alcool polyvinylique et / ou de l'amidon.

15. Procédé de production d'un récipient (1) selon la revendication 13 ou la revendication 14 dans lequel l'étape (d) du procédé comprend la retenue de l'insert (200) au moyen d'une lèvre de retenue (211) formée par le corps de récipient (12) et disposée autour l'insert (200).
